Europäisches Patentamt

European Patent Office

Office européen des brevets

(19)

(11) Numéro de publication: **0 214 912**
A1

# (12) DEMANDE DE BREVET EUROPEEN

(21) Numéro de dépôt: 86401953.4

(22) Date de dépôt: 05.09.86

(51) Int.Cl.⁴: **A 01 K 79/00**

(30) Priorité: 10.09.85 FR 8513397

(43) Date de publication de la demande:
18.03.87 Bulletin 87/12

(84) Etats contractants désignés:
AT BE CH DE GB IT LI LU NL SE

(71) Demandeur: Société Anonyme RECHERCHE MONTAGE
PRODUCTION "POLYLIGNES"
8 Rue Hippolyte Durand
F-44600 Saint Nazaire(FR)

(72) Inventeur: Chureau, Bernard
9 Rue du Fan
F-44420 La Turballe(FR)

(74) Mandataire: Lemonnier, André
4 Boulevard Saint-Denis
F-75010 Paris(FR)

(54) Dispositif de stockage des palangres.

(57) La présente invention concerne un dispositif de stockage d'une palangre comportant au moins un rail de stockage (6) disposé longitudinalement à la partie supérieure d'une caisse de stockage avec un dispositif pour engager les hameçons sur ce rail avec les avançons (2) et la maitresse (1) logés dans ladite caisse.

Conformément à l'invention le dispositif comporte en outre un dispositif vireur (4) constitué par au moins un galet (26) entrainé contre lequel est en appui au moins un galet d'appui (28) pour assurer le halage de la maitresse (1) et un dispositif assurant, sous le contrôle d'un détecteur d'hameçon ou d'avançon, l'avance pas à pas du dispositif vireur (4) de l'extrémité arrière du rail (6) vers l'extrémité d'entrée, le pas étant égal à l'espace de stockage d'un hameçon (3).

Fig.1

Croydon Printing Company Ltd

1

## Dispositif de stockage des palangres.

Les palangres sont des lignes dormantes constituées par une maitresse dont la longueur peut atteindre plusieurs milliers de mètres, maitresse sur laquelle scnt fixés à un écartement constant de l'ordre de quelques mètres des avançons à l'extrémité de chacun desquels est fixé un hameçon.

On a déjà décrit dans FR-A-2.545.322, FR-A-2.545.323 et FR-A-2.551.319 des dispositifs pour boetter les hameçons lors du filage ou opération de mise à l'eau de la palangre, pour débesquer les palangres, c'est-à-dire détacher les poissons des hameçons et pour vérifier les hameçons. Ces brevets ont permis une mécanisation poussée des opérations de pêche à la palangre avec une très grande vitesse de filage et de halage à bord de la palangre. Cette grande vitesse a rendu nécessaire d'étudier un mode de stockage particulier de la palangre entre le débesquage, de préférence la vérification des hameçons, et le boettage préalable au filage afin d'éviter les dangers d'une manipulation manuelle assurant l'accrochage des hameçons sur un rail de stockage.

La présente invention a pour but de résoudre ce problème et elle a pour objet un dispositif de stockage d'une palangre comportant au moins un rail de stockage disposé longitudinalement à la partie supérieure d'une caisse de stockage avec un dispositif pour engager les hameçons sur ce rail avec les avançons et la maitresse logés dans ladite caisse lequel comporte en outre un dispositif vireur constitué par au moins un galet entraîné contre lequel est en appui au moins un galet d'appui pour assurer le halage de la maitresse et un dispositif assurant, sous le contrôle d'un détecteur d'hameçon ou d'avançon, l'avance pas à pas du dispositif vireur de l'extrémité arrière du rail vers l'extrémité d'entrée, le pas étant égal à l'espace de stockage d'un hameçon.

Avec ce dispositif l'hameçon engagé sur le rail est tiré par l'avançon qui est halé par le dispositif vireur en même temps que la maitresse jusqu'à ce que l'hameçon se trouve sensiblement à la perpendiculaire du dispositif vireur, c'est-à-dire a atteint sur le rail un point qui se rapproche de l'entrée de l'emplacement de stockage d'un hameçon après le stockage de chaque hameçon.

Selon une autre caractéristique le dispositif vireur comporte un organe de guidage qui dévie l'avançon dans sa partie tendue entre la maitresse et l'hameçon accroché sur le rail de stockage pour dégager l'avançon de la génératrice de pincement entre le galet entraîné et le premier galet d'appui.

Selon une autre caractéristique un dispositif souple tel qu'une brosse coopère avec le rail pour maintenir les hameçons sur le rail tout en autorisant leur glissement longitudinal.

Selon une autre caractéristique un dispositif tel qu'une brosse rotative déplacée avec le dispositif vireur agit sur les hameçons pour les repousser jusqu'à leur position finale après arrêt du halage par l'avançon.

Selon une autre caractéristique le dispositif comporte une pluralité de rails parallèles avec un dispositif d'aiguillage entre le rail d'entrée et les différents rails de stockage, ce dispositif et un dispositif de décalage de rail à rail et de repositionnement du vireur à l'extrémité de sortie du nouveau rail étant asservi à un dispositif de détection du vireur dans une position voisine de l'extrémité d'entrée du rail précédent.

L'invention sera décrite plus en détail ci-après avec référence aux dessins ci-annexés qui illustrent un exemple de réalisation de l'invention et dans lesquels:

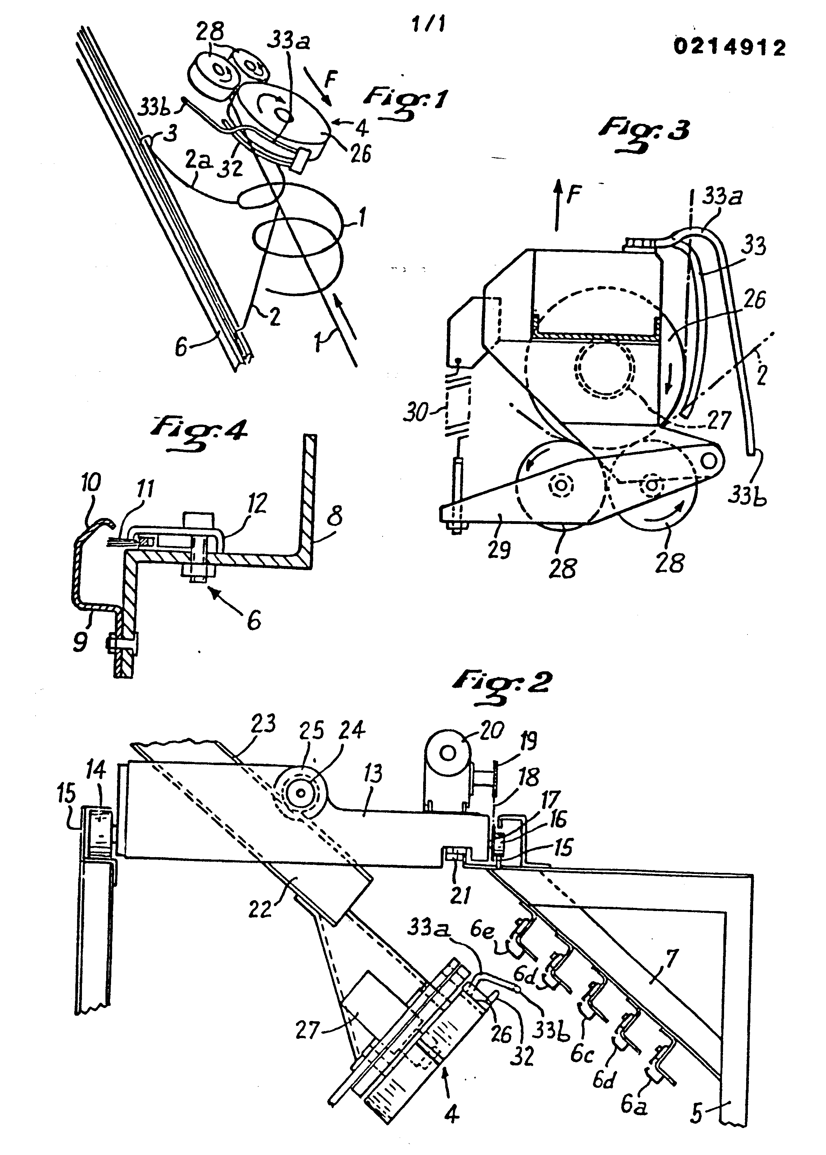

La figure 1 est une vue en perspective schématique des éléments principaux du dispositif vireur destinée à expliquer le fonctionnement du dispositif; la figure 2 est une vue en coupe transversale du dispositif de stockage avec un seul galet d'appui sur le vireur; la figure 3 est une vue en plan schématique du vireur et la figure 4 est une vue de détail d'un rail de stockage.

Dans les dessins la référence 1 désigne la ligne maitresse, la référence 2 un avançon et la référence 3 un hameçon. Les flèches indiquent le sens de défilement de la maitresse ou le sens de rotation du galet auquel la flèche est associée. La flèche F indique le sens de déplacement du vireur désigné dans son ensemble par la référence 4.

Le dispositif de stockage comporte une caisse parallélipipé-

4

dique allongée 5 dans la partie supérieure de laquelle sont disposées des traverses 7 inclinées à 45° portant les rails de stockage 6a à 6e, le rail 6a étant le plus bas et le plus près de la paroi de la caisse et étant utilisé le premier au cours du processus de stockage.

Comme illustré à la figure 4, un rail est constitué par un profilé support en Z 8 qui est fixé par une de ses ailes sur les traverses 7 et par un profilé mince 9 formant le rail proprement dit qui comporte une souche boulonnée sur l'aile du profilé 8 et un bord libre de section en crochet 10 derrière le bord extrême duquel sont engagés la pointe et l'ardillon de l'hameçon. Une bande de brosse 11 est fixée par des agrafes 12 sur l'âme du profilé 8 pour venir en dessous du bord extrême en crochet 10 du profilé 9. La pointe des hameçons s'engage entre les poils de la brosse 11, ce qui maintient de manière libérable par une traction les hameçons en place sur le rail et évite les dégagements et déplacements sous l'effet du roulis et du tangage.

Le vireur 4 est porté par un chariot constitué par une traverse en pont 13 qui circule par des galets tels que 14 sur des rails 15 de part et d'autre de l'ouverture supérieure de la caisse 5. Les galets 16 situés d'un côté du chariot sont entraînés en rotation du fait qu'ils sont chacun solidaires d'une roue à chaîne 17, la chaîne 18 passant sur une roue à chaîne 19 entraînée, par l'intermédiaire d'un réducteur, par un moteur pas à pas 20 qui reçoit les impulsions d'un détecteur d'entrée des hameçons. Pour éviter tout glissement la chaîne 18 est tendue sur la longueur de la caisse 5, passe sous les deux roues à chaîne 17 de deux galets 16 pour être renvoyée sur la roue à chaîne 19. Un galet 21 assure le guidage transversal.

La traverse en pont 13 du chariot comporte d'autre part une coulisse à 45° parallèle aux traverses 7, coulisse dans laquelle est montée mobile une poutre 22 qui porte sur un de ses bords une crémaillère 23 avec laquelle engrène le pignon denté 24 de sortie d'un moteur 25. La poutre 22 porte le vireur 4 qui peut ainsi être amené par le moteur 25 en face de celui des rails 6a à 6e qui correspond au stade du stockage.

Le vireur 4 est constitué par un galet principal 26 dont la périphérie est garnie d'un revêtement souple, galet qui est entraîné en rotation par un moteur hydraulique 27. Avec le galet 26 coopèrent deux galets presseurs 28 qui sont portés par un levier 29 soumis à l'action d'un ressort 30. Le bâti 31 du galet principal 26 porte deux tiges de guidage 32 et 33. La tige 32 est sensiblement de niveau avec le plan de la surface inférieure des galets 26-28 et entoure une partie de la périphérie du galet 26 tandis que la tige 33 est tout d'abord, dans sa partie 33a faisant face à la direction d'entrée de la maitresse, sensiblement de niveau avec le plan de la surface supérieure des galets 26-28, ladite tige s'écartant ensuite en s'abaissant pour que son extrémité 33b soit à l'extérieur et en dessous de l'extrémité de la tige 32.

Comme illustré à la figure 1, la maitresse 1 est tirée par le vireur 4 et passe entre les galets 26 et 28 pour tomber ensuite dans la caisse où sous l'effet de l'inertie et de sa rigidité propre elle se love en larges spires. Chaque avançon 2 est tendu en oblique entre la maitresse et le rail 6 sur lequel glisse l'hameçon 3 en étant freiné par la brosse 11. La maitresse 1 et la partie voisine de l'avançon 2 passent entre les barres 32-33 dans la partie où elles sont parallèles et l'avançon est serré avec la maitresse entre les galets 26-28. Toutefois l'avançon 2 vient au contact de la partie de la barre 33 inclinée vers le bas et lorsque l'hameçon 3 se trouve sensiblement au droit du vireur 4, l'avançon qui est sollicité vers le bas par la partie 33b de la barre 33 échappe au serrage entre les galets 26 et 28 ce qui arrête l'entraînement de l'hameçon, l'avançon pendant librement comme

illustré en 2a à la figure 1.

Pour le filage de la palangre, on file d'abord la longueur de palangre se trouvant sur le rail 6e, c'est-à-dire que l'on commence à filer par l'extrémité qui est rentrée la dernière au stockage.

Revendications

1. Un dispositif de stockage d'une palangre comportant au moins un rail de stockage (6) disposé longitudinalement à la partie supérieure d'une caisse de stockage (5) avec un dispositif pour engager les hameçons sur ce rail avec les avançons (2) et la maitresse (1) logés dans ladite caisse, caractérisé en ce qu'il comporte en outre un dispositif vireur (4) constitué par au moins un galet (26) entraîné contre lequel est en appui au moins un galet d'appui (28) pour assurer le halage de la maitresse (1) et un dispositif (19-20) assurant, sous le contrôle d'un détecteur d'hameçon ou d'avançon, l'avance pas à pas du dispositif vireur (4) de l'extrémité arrière du rail (6) vers l'extrémité d'entrée, le pas étant égal à l'espace de stockage d'un hameçon (3).

2. Un dispositif de stockage selon la revendication 1, caractérisé en ce que le dispositif vireur (4) comporte un organe de guidage 33 qui dévie l'avançon (2) dans sa partie tendue entre la maitresse (1) et l'hameçon (3) accroché sur le rail de stockage pour dégager l'avançon de la génératrice de pincement entre le galet entraîné (26) et le premier galet d'appui (28).

3. Un dispositif de stockage selon l'une quelconque des revendications 1 et 2, caractérisé en ce qu'un dispositif souple tel qu'une brosse (11) coopère avec le rail (6) pour maintenir les hameçons (2) sur le rail tout en autorisant leur glissement longitudinal.

4. Un dispositif de stockage selon l'une quelconque des revendications 1 à 3, caractérisé en ce qu'un dispositif tel qu'une brosse rotative déplacée avec le dispositif vireur (4) agit sur les hameçons (3) pour les repousser jusqu'à leur position finale après arrêt du halage par l'avançon.

5. Un dispositif de stockage selon l'une quelconque des revendications 1 à 4,

caractérisé en ce qu'il comporte une pluralité de rails parallèles (6a - 6e) avec un dispositif d'aiguillage entre le rail d'entrée et les différents rails de stockage, ce dispositif et un dispositif (23 - 25) de décalage de rail à rail et de repositionnement du vireur (4) à l'extrémité de sortie du nouveau rail étant asservi à un dispositif de détection du vireur dans une position voisine de l'extrémité d'entrée du rail précédent.

0214912

Fig.1

Fig.3

Fig.4

Fig.2

## Office européen
des brevets

**RAPPORT DE RECHERCHE EUROPEENNE**

**0214912**
Numéro de la demande

EP 86 40 1953

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| A | DE-A-1 817 621 (AIS MUSTADS FABRIKKER) <br> * Page 2, paragraphe 2 - page 4, paragraphe 1; figures 1,2 * | 1 | A 01 K 79/00 |
| A | GB-A-2 124 862 (MARINE CONSTRUCTION AND DESIGN CO.) | | |
| A | GB-A-2 106 361 (JACOBSEN) <br> * Page 3, lignes 115-130; page 4, lignes 1-4; figures 1,5 * | 4 | |
| A | US-A-4 354 323 (HUFF) <br> * Colonne 5, ligne 57 - colonne 6, ligne 29; colonne 8, ligne 14 - colonne 9, ligne 3; figures 2-8 * | 5 | |

---

**DOMAINES TECHNIQUES RECHERCHES (Int Cl 4)**

A 01 K

Le présent rapport de recherche a été établi pour toutes les revendications

| Lieu de la recherche | Date d'achèvement de la recherche | Examinateur |
|---|---|---|
| LA HAYE | 07-11-1986 | VERDOODT S.J.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82